Europäisches Patentamt

European Patent Office

Office européen des brevets

(19)

(11) Numéro de publication: **0 124 438**
**B1**

(12) **FASCICULE DE BREVET EUROPEEN**

(45) Date de publication du fascicule du brevet:
09.03.88

(21) Numéro de dépôt: **84400842.5**

(22) Date de dépôt: **25.04.84**

(51) Int. Cl.⁴: **C 02 F 3/10**

(54) **Perfectionnement aux garnissages pour filtres biologiques.**

(30) Priorité: **29.04.83 FR 8307186**

(43) Date de publication de la demande:
**07.11.84 Bulletin 84/45**

(45) Mention de la délivrance du brevet:
**09.03.88 Bulletin 88/10**

(84) Etats contractants désignés:
**AT BE CH DE GB IT LI LU NL SE**

(56) Documents cités:
**EP - A - 0 017 888**
**FR - A - 2 461 687**

(73) Titulaire: **Société Anonyme d'Etudes, de Recherches et de Productions d'Agents Chimiques - E.R.P.A.C., 9, rue Auguste Barbier, F-75011 Paris (FR)**

(72) Inventeur: **Treyssac, Georges, 10, rue Racine, F-59700 Marcq en Baroeul (FR)**

(74) Mandataire: **Kedinger, Jean-Paul et al, c/o Cabinet Maiemont 42, avenue du Président Wilson, F-75116 Paris (FR)**

## Description

La présente invention a pour objet de nouveaux supports de biomasses destinés à être le siège de processus biologiques, aérobies ou anaérobies, processus désignés ci-après par le terme général fermentations, ces supports comprenant une substance absorbante mélangée, sous forme de particules à surface granuleuse, à un liant comprenant une matière plastique inerte chimiquement au moins à l'égard de ladite substance absorbante, des effluents à traiter et de la biomasse destinée à être fixée sur le support.

Dans le cadre des procédés d'épuration des effluents résiduaires les plus divers, comme par exemple les eaux usées, il est maintenant devenu classique de mettre en œuvre des biomasses (ensembles de microorganismes du type algues, bactéries, moisissures ou levures) aptes à digérer les substances polluantes biodégradables présentes dans les effluents à l'état dissous ou en suspension. Ces biomasses sont plus précisément utilisées sous la forme de lits ou filtres biologiques comprenant un garnissage constitué par un empilage de supports élémentaires sur lesquels les biomasses sont retenues sous la forme d'un film biologique.

Les garnissages actuellement utilisés sont de natures très diverses et on distingue essentiellement ceux réalisés en produits naturels tels que coke, pouzzolanes ou galets par exemple et ceux réalisés en produits synthétiques tels que charbon actif, argiles plus ou moins cuites, chamottes, anneaux Raschig, anneaux du type FLOCOR par exemple ou tubes du type CLOISONYL par exemple. Par FR-A-2 461 687, on connaît également des supports de biomasse comprenant de la chamotte, contenant au sein de sa masse, des micropores actives de charbon. Par EP-A-0 017 888, on connaît en outre un matériau destiné à fixer une biomasse, ce matériau étant constitué par une matière plastique contenant, au sein de sa masse, une substance absorbante telle que le kieselgur.

En fait, dans le choix d'un garnissage, plusieurs critères sont a prendre en considération. Ainsi, les garnissages permettant d'assurer une fixation et une croissance optimale des biomasses doivent essentiellement posséder les propriétés suivantes:

Ils doivent tout d'abord se caractériser par un état de surface essentiellement granuleux permettant un meilleur accrochage des biomasses que les garnissages à surface lisse obtenus généralement par extrusion ou moulage. Ils doivent ensuite permettre l'adsorption et partant la rétention de tout ou partie des substances polluantes à dégrader, des dérivés résultant de la dégradation partielle de ces substances et/ou des enzymes produites par les microorganismes. Cette adsorption peut se faire aussi bien au niveau des surfaces extérieures du garnissage qu'au niveau de ses surfaces intérieures non accessibles aux microorganismes mais accessibles à l'effluent à traiter, aux substances polluantes et aux enzymes produites par lesdits microorganismes. Cette caractéristique d'adsorption favorise en effet l'action des microorganismes et des enzymes qu'ils sécrètent. En outre, elle permet une régularisation du traitement d'épuration en faisant en quelque sorte jouer aux surfaces adsorbantes le rôle de «magasins de stockage» des substances polluantes. On précisera très schématiquement à ce sujet qu'il y a au niveau de ces surfaces adsorbantes, adsorption (stockage) des substances polluantes et des enzymes sécrétés par les microorganismes, dégradation par lesdites enzymes desdites substances qui se trouvent ainsi «déstockées» et adsorption (stockage) d'une nouvelle quantité de substances polluantes en remplacement des substances dégradées et «déstockées».

Il est important par ailleurs que les garnissages présentent une surface spécifique la plus grande possible. On comprendra en effet que plus cette surface spécifique est importante, plus la surface du film biologique retenu par le garnissage sera élevée et plus la capacité de traitement sera intéressante. Il est à noter ici que la capacité de traitement dépend également de l'adsorption évoquée au paragraphe précédent. Plus précisément, plus les possibilités d'adsorption seront grandes, plus la capacité de traitement sera intéressante.

La granulométrie constitue une autre caractéristique importante. En effet, si cette granulométrie est trop faible, il existera un volume libre entre les supports élémentaires constituant le garnissage, trop faible pour accueillir les matières en suspension dans les effluents à traiter, les gaz produits au cours de la dégradation biologique et la biomasse qui se développe au cours du traitement. Il y a donc dans ce cas risque de colmatage relativement rapide du garnissage ce qui d'une part, oblige à interrompre fréquemment le traitement pour procéder au lavage du garnissage et d'autre part, interdit le traitement d'effluents présentant une teneur trop élevée en matières en suspension.

Enfin, il est essentiel que les garnissages présentent une bonne résistance mécanique pour que l'on ne soit pas limité quant à la hauteur des lits biologiques et quant aux possibilités d'agitation des garnissages en vue d'en extraire la biomasse et/ou les gaz développés au cours du traitement.

A l'heure actuelle, il n'existe aucun garnissage répondant de manière absolument satisfaisante à l'ensemble des critères évoqués ci-dessus. Le but de la présente invention est par conséquent de remédier à cet état de chose et pour ce faire elle propose de nouveaux supports du type de ceux mentionnés au premier paragraphe de la présente description et qui se caractérisent en ce qu'une partie au moins desdites particules de substance adsorbante émergent à la surface dudit support.

De tels supports présentent tout d'abord une surface extrêmement rugueuse due à la présence sur celle-ci des particules de substance adsorbante elles-mêmes à surface granuleuse. Ces supports sont donc particulièrement propices à un bon accrochage de la biomasse et au développement de cette dernière sur ceux-ci, accrochage et développement nullement entravés par les turbulences, agitation ou brassage auxquels les supports peuvent être soumis au cours du traitement. Par ailleurs, les particules de matière adsorbante émergeant à la surface des supports peuvent pleinement jouer leur rôle d'agent adsorbant en vue de faciliter l'action de dégradation des enzymes et des microorganismes et d'assurer le stockage évoqué précédemment des matières polluantes en vue de régulariser le traitement d'épuration. En outre, compte tenu de la porosité importante qui caractérise les matières adsorbantes et de l'état de surface tourmenté et granuleux de ces matières, le support selon l'invention peut présenter une grande surface spécifique d'accrochage de la biomasse et de rétention des substances polluantes, des dérivés résultant de la dégradation de ces substances et des enzymes et par là même assurer des capacités élevées de traitement.

D'autre part, les supports selon l'invention peuvent, selon la technique de fabrication retenue, être produits avec n'importe quelles dimensions en section, longueur, largeur ou épaisseur. Il est par conséquent possible d'obtenir des supports ayant la granulométrie désirée de manière à ce qu'une fois empilés, ils conduisent à l'obtention d'un garnissage pour lits ou filtres biologiques, dont le volume libre, c'est-à-dire le volume existant entre les supports empilés, soit adapté notamment à la teneur en matière en suspension dans l'effluent à traiter et à la quantité de gaz et de biomasse produits au cours de la dégradation biologique et ce, dans le but d'éviter un colmatage trop fréquent du garnissage par les matières en suspension et la biomasse et le blocage trop rapide des sites actifs de la biomasse qui se trouvent isolés de l'effluent à traiter par lesdits gaz.

Enfin, les matières adsorbantes présentant généralement l'inconvénient de ne posséder qu'une faible résistance mécanique due en particulier à leur forte porosité, il est indispensable de leur adjoindre un élément capable de pallier à cet inconvénient sans nuire par ailleurs aux qualités desdites substances adsorbantes. C'est le rôle du liant utilisé dans le cadre de la présente invention, liant qui confère aux supports la résistance mécanique qui fait défaut à la substance adsorbante. La résistance mécanique des supports devra être suffisante pour permettre leur empilage sans écrasement sur des hauteurs permettant des traitements efficaces. De plus, cette résistance mécanique devra être suffisante pour permettre le lavage, l'agitation et le brassage desdits supports (notamment en vue de l'élimination des gaz de la biomasse produits au cours du traitement) sans qu'il y ait usure de ces derniers, usure qui conduit à la formation de fines qui contaminent désavantageusement l'effluent traité.

A titre de substance adsorbante, on préfèra tout particulièrement mettre en œuvre du charbon actif et/ou des substances possédant des propriétés analogues à celles du charbon actif. Quant au matériau à bonne résistance mécanique et inertie chimique, l'homme de métier n'éprouvera aucune difficulté à choisir celui qui sera le mieux adapté à la nature de la substance adsorbante, de la biomasse et des effluents à traiter. Néanmoins, on utilisera de préférence les matières plastiques, thermoplastiques ou thermodurcissables, et notamment les poly (chlorure de vinyle), les polyéthylènes, les polypropylènes, les polyesters et les poly(styrène-butadiène-acrylonitrile), matières plastiques qui présentent par ailleurs l'avantage de pouvoir être travaillées très commodément. Il va de soi qu'entrent également dans le cadre de la présente invention toutes les matières plastiques chargées, du moins dans la mesure où les charges (plastifiant, stabilisant...) qu'elles renferment n'affectent pas de manière désavantageuse les propriétés recherchées des supports.

Des résultats particulièrement intéressants, aussi bien du point de vue qualité des supports réalisés que du point de vue prix, sont obtenus quand les supports selon l'invention contiennent environ 5 à 40% en poids et de préférence environ 20 à 25% en poids de substance adsorbante.

Selon un mode de réalisation préféré de l'invention, le liant est constitué par un matériau expansé. L'utilisation d'un tel matériau présente essentiellement deux avantages. D'abord, il confère à la surface des supports un aspect plus tourmenté (boursouflures) qui améliore encore l'accrochage de la biomasse. Ensuite, en choisissant le degré d'expansion, il est possible de régler la densité des supports et donc de produire des supports ayant des densités très diverses. Ceci est un point important car on sait que si les différents supports élémentaires formant un garnissage sont de granulométries différentes, mais de même densité, il se produit lors du lavage par injection d'eau à la base de ce garnissage, un réarrangement de ces supports selon leur taille, ceux de dimensions les plus faibles se rassemblant à la partie supérieure du garnissage et ceux de dimensions les plus élevées se rassemblant à la partie basse. Il s'ensuit que lorsque l'on réutilise le garnissage ainsi lavé, pour l'épuration d'un effluent, ce dernier étant amené à la partie supérieure du garnissage et extrait sous forme purifiée à la base de ce même garnissage, il se produit un colmatage rapide dû, comme expliqué précédemment, au faible volume libre existant entre les supports de faible granulométrie formant la couche supérieure du garnissage. Or, cet inconvénient peut aisément être supprimé si l'on dispose de supports de densité différente et plus précisément de supports dont la densité diminue de manière appropriée quand la taille augmente. Ainsi, lorsque l'on procède au lavage d'un garnissage constitué par de tels supports élémentaires, on assiste à un réarrangement inverse de celui observé précédemment, les supports de plus grandes dimensions et donc de plus faibles densités se regroupant à la partie supérieure et ceux de plus faibles dimensions et donc de plus grandes densités se regroupant à la partie inférieure. Il s'ensuit que dans la zone supérieure du garnissage il existe un grand volume libre entre les supports en raison de la grande taille des supports occupant cette zone et de ce fait un colmatage du garnissage ne se produit qu'après une durée relativement importante du traitement d'épuration.

Par ailleurs, le fait que grâce à la présente invention on puisse disposer de supports de densité très diverse, offre la possibilité de réaliser très aisément, en utilisant des supports de densité appropriée, des lits biologiques du type flottant ou non-flottant, quel que soit le lieu d'introduction dans ces lits de l'effluent à traiter.

Il est à noter qu'en ce qui concerne la réalisation pratique des supports selon l'invention, on pourra faire appel aux méthodes courantes d'incorporation de charges dans un liant et aux techniques classiques d'extrusion, d'injection, thermoformage, moulage, moulage par injection, rotomoulage, calendrage, etc..., méthodes et techniques parmi lesquelles l'homme de métier pourra aisément choisir celles qui seront le mieux adaptées à la nature du liant utilisé et à la forme (granulés, plaques, cylindres, tubes ou anneaux par exemple) qu'il désire donner aux supports. La seule précaution à prendre lors de la réalisation des supports selon l'invention sera bien évidemment d'éviter que la surface des particules de substances adsorbante soit totalement recouverte par le liant.

De même, les liants expansés pourront être réalisés en faisant appel aux techniques classiques d'expansion utilisant généralement des agents d'expansion incorporés au liant sous forme de liquide ou de poudre et qui sont volatilisés ou décomposés sous l'effet de la chaleur avec production de gaz au sein dudit liant.

On donnera ci-après à titre d'exemple, un mode de réalisation des supports selon l'invention.

On procède tout d'abord au prémélange d'une poudre de poly(chlorure de vinyle), d'une poudre de charbon actif et d'un agent d'expansion (poudre). On introduit ensuite le mélange résultant dans une trémie alimentant une vis d'extrusion où ledit mélange est porté à une température assurant un ramollissement suffisant des grains de poly(chlorure de vinyle) pour qu'il y ait soudure de ces grains sans qu'il y ait pour autant recouvrement des particules de charbon actif par un film de poly(chlorure de vinyle). Cette température, dépendant notamment du type d'extrudeuse utilisée, de la nature du poly(chlorure de vinyle), de la quantité de charbon actif et de la granulométrie de ce dernier et du P.C.V., pourra aisément être déterminée par quelques essais préalables. Quant à l'agent d'expansion, il devra bien entendu être choisi pour se volatiliser ou se décomposer à la température ainsi déterminée. Le produit extrudé est ensuite découpé aux dimensions voulues puis refroidi à l'eau ou à l'air, ces deux opérations pouvant éventuellement être inversées.

Selon une variante, on peut procéder à l'extrusion d'un mélange pulvérulent de poly(chlorure de vinyle) et d'agent d'expansion, le charbon actif étant incorporé au produit extrudé soit par saupoudrage sur la surface suffisamment ramolli de ce produit pour que les particules de charbon actif y adhère, soit par incrustation.

Le support selon l'invention aura avantageusement la forme de cylindre, tube ou anneau dont les surfaces présentent des cannelures, ces dernières ayant pour effet d'augmenter encore la surface spécifique dudit support.

Comme cela a été indiqué précédemment, les supports selon l'invention peuvent se présenter sous les formes les plus diverses avec des dimensions pouvant se situer dans de larges plages. Ainsi par exemple, les supports peuvent se présenter sous la forme d'anneaux dont le diamètre peut varier de 10 à 80 mm, l'épaisseur peut varier de quelques dixièmes de millimètre à quelques millimètres et la longueur peut varier de quelques millimètres à plusieurs centaines de millimètres.

Les supports selon l'invention seront avantageusement utilisés pour la réalisation de garnissages pour lits ou filtres biologiques particulièrement adaptés à l'épuration d'effluents liquides contenant des substances polluantes biodégradables. Ces garnissages, quand ils sont constitués de supports contenant du charbon actif à titre de matière adsorbante, présentent d'une manière générale une surface spécifique accessible aux microorganismes de l'ordre de $(50 \text{ à } 500) \times K \text{ m}^2/\text{m}^3$, K étant un cœfficient habituellement égal ou supérieur à 2 et fonction, d'une part de la quantité de charbon actif et de la surface des pores de ce charbon actif accessibles aux microorganismes et, d'autre part de l'état de surface des supports (cannelures, boursouflures). Ces lits et filtres peuvent être mis en œuvre aussi bien dans les procédés du type à lit non-noyé (dans lesquels l'effluent à purifier ruisselle sur le lit) que dans les procédés du type à lit noyé (dans lesquels le lit est complètement immergé dans l'effluent à traiter) et ce, que le processus de fermentation mis en jeu soit du type aérobie ou anaérobie. Ainsi à titre d'exemple, on indiquera que ces garnissages permettent d'atteindre en anaérobiose, un abattement de la CDO (demande chimique en oxygène) en 24 heures de l'ordre de 10 à 50 kg/m³ de garnissage avec des rendements de l'ordre de 80% ou plus et production de gaz contenant jusqu'à 80% de méthane, alors qu'avec les garnissages existant actuellement on ne peut obtenir que des abattements de la DCO de 5 à 20 kg/m³ avec des rendements du même ordre mais avec production de gaz ne contenant que 70% de méthane.

**Revendications**

1. Support pour biomasse destiné à être le siège de fermentations biologiques en particulier dans les traitements d'épuration d'effluents résiduaires, comprenant une substance adsorbante mélangée, sous forme de particules à surface granuleuse, à un liant comprenant une matière plastique inerte chimiquement au moins à l'égard de ladite substance adsorbante, des effluents à traiter et de la biomasse destinée à être fixée sur le support, caractérisé en ce qu'une partie au moins desdites particules émerge à la surface dudit support.

2. Support selon la revendication 1, caractérisé en ce que la substance adsorbante est constituée par du charbon actif et/ou une substance possédant des propriétés analogues à celles du charbon actif.

3. Support selon la revendication 1 ou 2, caractérisé en ce que la matière plastique est choisie parmi les suivantes: poly(chlorure de vinyle), polyéthylènes, polypropylènes, polyesters, poly(styrène–butadiène–acrylonitrile).

4. Support selon l'une quelconque des revendications précédentes, caractérisé en ce qu'il contient 5 à 40% en poids de substance adsorbante.

5. Support selon la revendication 4, caractérisé en ce qu'il contient 20 à 25% en poids de substance adsorbante.

6. Support selon l'une quelconque des revendications précédentes, caractérisé en ce que le liant est constitué par un matériau expansé.

7. Support selon l'une quelconque des revendications précédentes, caractérisé en ce qu'il a la forme d'un cylindre, d'un tube ou d'un anneau dont les surfaces présentent des cannelures.

8. Garnissage pour lits ou filtres biologiques utilisés notamment pour l'épuration d'effluents liquides contenant des substances polluantes biodégradables, caractérisé en ce qu'il est constitué par un empilement de supports selon l'une quelconque des revendications précédentes.

## Claims

1. A biomass support medium intended to be the seat of biological fermentations in particular in treatments for purifying waste effluents, comprising an adsorbing substance mixed, in the form of particles with a granular surface, with a binder comprising a plastic material chemically inert with respect to said adsorbing substance, the effluents to be treated and the biomass intended to be fixed on the support medium, characterized in that a part at least of said particles emerge at the surface of said support medium.

2. The support medium according to claim 1, characterized in that the adsorbing substance is formed by active charcoal and/or a substance having properties similar to those of active charcoal.

3. The support medium according to claim 1 or 2, characterized in that the plastic material is chosen from the following: polyvinyl chlorides, polyethylenes, polypropylenes, polyesters, styrene–butadiene–acrylonitrile polymers.

4. The support medium according to any one of the preceding claims, characterized in that it contains 5 to 40% by weight of adsorbing substance.

5. The support medium according to claim 4, characterized in that it contains 20 to 25% by weight of adsorbing substance.

6. The support medium according to any one of the preceding claims, characterized in that the binder is formed by an expanded material.

7. The support medium according to any one of the preceding claims, characterized in that it is in the form of a cylinder, a tube or a ring whose surfaces present grooves.

8. A filling for biological beds or filters used more especially for purifying liquid effluents containing biodegradable polluting substances, characterized in that it is formed by a pile of supports according to any one of the preceding claims.

## Patentansprüche

1. Biomassen-Träger, insbesondere zur Reinigungsbehandlung von Restabwässern aufgrund von biologischer Gärung, bestehend aus einer absorbierenden partikelförmigen Substanz mit körniger Oberfläche, die mit einem Bindemittel vermischt ist, welches zumindest für die genannte Substanz chemisch neutral im Bereich der zu behandelnden Abwässer ist und aus einer zur Anbringung auf dem Träger bestimmten Biomasse, dadurch gekennzeichnet, dass zumindest ein Anteil der Partikel aus der Oberfläche des Trägers herausragen.

2. Träger entsprechend Anspruch 1, dadurch gekennzeichnet, dass die absorbierende Substanz aus Aktivkohle und/oder aus einer Substanz mit denen der Aktivkohle ähnlichen Eigenschaften besteht.

3. Träger entsprechend Anspruch 1 oder 2, dadurch gekennzeichnet, dass der Kunststoff unter den folgenden ausgewählt ist: Vinylchlorid (-Polychlorid), Polyäthylen, Polypropylen, Polyester, Poly (Styrol, -Butadien, -Acrynitril).

4. Träger entsprechend den vorherigen Ansprüchen, dadurch gekennzeichnet, dass er 5 bis 50% Gewichtsanteile an absorbierender Substanz enthält.

5. Träger entsprechend dem Anspruch 4, dadurch gekennzeichnet, dass er 20 bis 25% Gewichtsanteile an absorbierender Substanz enthält.

6. Träger entsprechend einem der vorherigen Ansprüche, dadurch gekennzeichnet, dass das Bindemittel aus einem porigen Material besteht.

7. Träger entsprechend einem der vorherigen Ansprüche, dadurch gekennzeichnet, dass er die Form eines Zylinders, eines Rohres oder eines Ringes hat, dessen Oberflächen geriffelt sind.

8. Füllmaterial für biologische Betten oder Filter namentlich für die Reinigung von flüssigen Abgängen, die umweltverschmutzende und biologisch abbaubare Substanzen enthalten, dadurch gekennzeichnet, dass das Füllmaterial aus einem Stapel von Trägern nach den vorherigen Ansprüchen besteht.